# EUROPEAN PATENT APPLICATION

(11) **EP 4 786 270 A1**
(43) Date of publication of application: **05.08.2026**
(21) Application number: 23953753.3
(22) Date of filing: 28.09.2023
(51) Int. Cl.: B60N 2/56, B60N 2/879

(54) **REAR PROJECTION SCREEN, SEAT AND VEHICLE**

(71) Applicant: Yinwang Intelligent Technologies Co., Ltd., Shenzhen, Guangdong 518110 (CN)
(72) Inventor: XU, Hao, Shenzhen, Guangdong 518129 (CN); SHI, Hao, Shenzhen, Guangdong 518129 (CN); ZHU, Xin, Shenzhen, Guangdong 518129 (CN); ZHANG, Tianzhu, Shenzhen, Guangdong 518129 (CN)
(74) Representative: Gill Jennings & Every LLP
(86) International application number: PCT/CN2023/122871
(87) International publication number: WO 2025/065609

(57) **Abstract**

This application provides a rear projection screen, a seat, and a vehicle. This application may be applied to the field of smart cockpits. A rear projection screen is mounted on the seat, the seat includes a heat dissipation apparatus, and the heat dissipation apparatus includes an air inlet, a fan, and an air outlet. The air inlet, the fan, and the air outlet are arranged from bottom to top. The rear projection screen is located in an air-outlet path of the fan. This application may be applied to a smart vehicle or an electric vehicle, to help improve heat dissipation efficiency of a rear projection screen, thereby preventing a temperature inside a seat backrest from rising too quickly.

## Description

### TECHNICAL FIELD

This application relates to the field of smart cockpits, and more specifically, to a rear projection screen, a seat, and a vehicle.

### BACKGROUND

With development of application scenarios in a vehicle cockpit, a vehicle is not only a means of transportation, but also needs to meet scenario requirements of family emotion interaction, in-vehicle office, and entertainment at any time. In-vehicle entertainment has evolved from the sound, image, and multimedia eras to the immersive experience era. A vehicle-mounted display becomes a rigid demand. Particularly, a vehicle-mounted display with a large screen becomes a preferred entertainment device of a user. How to resolve a heat dissipation problem of the vehicle-mounted display with the large screen becomes an urgent problem to be resolved.

### SUMMARY

This application provides a rear projection screen, a seat, and a vehicle, to help improve heat dissipation efficiency of the rear projection screen, thereby preventing a temperature inside a seat backrest from rising too quickly.

According to a first aspect, this application provides a seat. A rear projection screen is mounted on the seat, the seat includes a heat dissipation apparatus, and the heat dissipation apparatus includes an air inlet, a fan, and an air outlet. The air inlet, the fan, and the air outlet are arranged from bottom to top. The rear projection screen is located in an air-outlet path of the fan.

Based on the foregoing technical solution, the air inlet is arranged at the bottom, so that unheated air enters a seat backrest, and a temperature of the air blown by the fan rises after passing through the rear projection screen. Because the air rises after being heated, the heated air may be exhausted out of the seat via the air outlet. In this way, heat dissipation efficiency of the rear projection screen is improved, and a temperature inside the seat backrest can also be prevented from rising too quickly.

In some possible implementations, the rear projection screen may also be referred to as a light field screen. The rear projection screen may break through a limitation of physical space in a vehicle cockpit, and achieve long-distance imaging at a specific distance (for example, 3 meters), thereby reducing visual fatigue. In addition, a large size (for example, 40 inches) picture can be achieved based on a spatial optical system design. With reference to the first aspect, in some implementations of the first aspect, the seat includes a seat cover, a plurality of ventilation holes are disposed on the seat cover, and an arrangement position of at least a part of the plurality of ventilation holes corresponds to an arrangement position of the air outlet.

Based on the foregoing technical solution, the ventilation hole on the seat cover is reused, so that air from the air outlet can be exhausted out of the seat via the ventilation hole. In this way, no additional hole needs to be drilled on the seat cover. This helps reduce production and design costs of the seat.

In some possible implementations, a size of the air outlet is greater than a size of the ventilation hole (for example, an area of the air outlet is greater than an area of the ventilation hole).

In some possible implementations, a projection area of at least the part of ventilation holes on a preset plane (for example, the ground) is located in a projection area of the air outlet on the preset plane.

With reference to the first aspect, in some implementations of the first aspect, the heat dissipation apparatus further includes a backrest ventilation bag. One end of the backrest ventilation bag is connected to the fan, an air outlet is disposed on the other end of the backrest ventilation bag, and the rear projection screen is located on an air outlet path of the air outlet of the backrest ventilation bag.

Based on the foregoing technical solution, air blown from the air outlet of the fan may first pass through the backrest ventilation bag, and then be blown to the rear projection screen from the air outlet of the backrest ventilation bag. In this way, wind energy can be aggregated via the backrest ventilation bag. This helps improve heat dissipation efficiency of the rear projection screen.

With reference to the first aspect, in some implementations of the first aspect, the air outlet is located in a top area of the seat backrest in the seat.

Based on the foregoing technical solution, the seat cover provided with the ventilation hole is generally located in the top area of the seat backrest. Therefore, the air outlet in the heat dissipation apparatus is disposed in the top area of the seat backrest, so that the ventilation hole on the seat cover can be reused. In this way, no additional hole needs to be drilled on the seat cover. This helps reduce production and design costs of the seat.

With reference to the first aspect, in some implementations of the first aspect, the seat includes a seat backplane, a recess portion is disposed on the seat backplane, and the air inlet is disposed in the recess portion.

Based on the foregoing technical solution, the air inlet may be disposed in the recess portion of the seat backplane, so that an appearance of the seat is not affected. In addition, because a knee space position of a user is far away from a human body, the air is not easily be perceived by the user during air intake.

In some possible implementations, a height between the air inlet and the ground of the cockpit is [200 mm, 500 mm]. According to a second aspect, this application provides a seat. The seat includes a backrest framework, the backrest framework includes an upper beam, and the upper beam includes a first mounting hole, so that a rear projection screen is fastened to the upper beam via the first mounting hole.

Based on the foregoing technical solution, the mounting hole is disposed on the upper beam of the seat framework, so that the rear projection screen can be fastened to the upper beam via the mounting hole, thereby implementing mounting of the rear projection screen on the seat.

In some possible implementations, the rear projection screen includes a mounting hole, and the mounting hole on the upper beam and the mounting hole on the rear projection screen are fastened via a connection piece (for example, a bolt), so that the rear projection screen can be fastened to the upper beam.

With reference to the second aspect, in some implementations of the second aspect, the upper beam includes a positioning pin, and the positioning pin is configured to position the rear projection screen.

Based on the foregoing technical solution, the positioning pin is disposed on the upper beam of the seat framework, so that installation personnel can conveniently mount the rear projection screen on the seat framework.

According to a third aspect, this application provides a headrest. The headrest is located in a seat, a rear projection screen is mounted on the seat, a first side of the headrest is provided with a ring bracket, and the rear projection screen is located inside the ring bracket. The first side is a side away from a head of a user on the seat.

Based on the foregoing technical solution, the ring bracket disposed on the first side of the headrest can protect the rear projection screen, and prevent the rear projection screen from being damaged by an external force.

With reference to the third aspect, in some implementations of the third aspect, the headrest includes a support portion bent towards a second side, the support portion is configured to support the headrest on the second side, and the second side is a side close to the head of the user on the seat.

Based on the foregoing technical solution, the headrest includes the support portion bent towards a direction of the head of the user, and the support portion may support a soft material that is in the headrest and that is in contact with the head of the user, thereby bringing comfort experience to the user.

According to a fourth aspect, this application provides a rear projection screen. The rear projection screen includes a mounting bracket, and the mounting bracket includes a mounting hole, so that the rear projection screen is fastened to an upper beam of a seat framework via the mounting hole.

Based on the foregoing technical solution, the mounting hole is disposed on the mounting bracket of the rear projection screen, so that the rear projection screen can be fastened to the upper beam of the backrest framework via the mounting hole, thereby implementing mounting of the rear projection screen on the seat.

With reference to the fourth aspect, in some implementations of the fourth aspect, the rear projection screen further includes a rotation shaft, and a screen of the rear projection screen rotates around the rotation shaft.

Based on the foregoing technical solution, the rotation shaft is disposed in the rear projection screen, and the user can press a screen edge of the rear projection screen, so that the screen of the rear projection screen rotates around the rotation shaft. In this way, for users with different physical features, the screen of the rear projection screen may be adjusted to a position with good movie watching effect by pressing the screen edge. This helps improve movie watching experience of the user.

In some possible implementations, the rear projection screen includes a damping structure. The damping structure may be configured to prevent the screen of the rear projection screen from rotating when a force applied by the user on the screen edge of the rear projection screen is less than or equal to a preset value (for example, the preset value may be 7N to 10N) or when the user does not press the screen edge.

With reference to the fourth aspect, in some implementations of the fourth aspect, the mounting bracket further includes another mounting hole, the seat framework further includes a positioning pin, and a size of the another mounting hole matches a size of the positioning pin.

Based on the foregoing technical solution, the mounting hole that is used to match the positioning pin is disposed on the mounting bracket of the rear projection screen, so that installation personnel can conveniently mount the rear projection screen on the seat framework.

According to a fifth aspect, a seat system is provided. The seat system includes any one of the possible seats according to the first aspect or the second aspect, any one of the possible headrests according to the third aspect, and any one of the possible rear projection screens according to the fourth aspect.

According to a sixth aspect, a vehicle is provided. The vehicle includes any one of the possible seats according to the first aspect or the second aspect, or the vehicle includes any one of the possible headrests according to the third aspect, or the vehicle includes any one of the possible rear projection screens according to the fourth aspect, or the vehicle includes the seat system according to the fifth aspect.

The seat in the first aspect, the seat in the second aspect, the headrest in the third aspect, and the rear projection screen in the fourth aspect may be combined with each other.

For example, a structure of the seat in the first aspect and a structure of the seat in the second aspect may be combined with each other. For example, the seat includes a seat backrest, the seat backrest includes a backrest framework, the backrest framework includes an upper beam, and the upper beam includes a mounting hole, so that the rear projection screen is fastened to the upper beam via the mounting hole. The seat includes a heat dissipation apparatus, and the heat dissipation apparatus includes an air inlet, a fan, and an air outlet. The air inlet, the fan, and the air outlet are arranged from bottom to top. The rear projection screen is located in an air-outlet path of the fan.

### BRIEF DESCRIPTION OF DRAWINGS

FIG. 1 is a diagram of a backrest framework according to an embodiment of this application;
FIG. 2 is another diagram of a backrest framework according to an embodiment of this application;
FIG. 3 is a diagram of a rear projection screen according to an embodiment of this application;
FIG. 4 is a diagram of rotating a rear projection screen around a rotation shaft according to an embodiment of this application;
FIG. 5 is a diagram of a seat on which a rear projection screen is arranged according to an embodiment of this application;
FIG. 6 is a diagram of a heat dissipation structure according to an embodiment of this application;
FIG. 7 is a diagram of a position relationship between a fan, a backrest ventilation bag, and a rear projection screen according to an embodiment of this application;
FIG. 8 is a physical image of a backrest ventilation bag according to an embodiment of this application;
FIG. 9 is a diagram of a backplane of a seat backrest according to an embodiment of this application; and
FIG. 10 is a diagram of a plurality of ventilation holes and an air outlet on a seat cover according to an embodiment of this application.

### Reference numerals:

100: backrest framework; 110: upper beam; 111: first mounting hole; 112: positioning pin; 113: headrest rod mounting hole; 114: headrest rod mounting beam; 120: seat backrest; 121: backplane; 122: seat cover; 1221: ventilation hole; 130: headrest; 131: front-side headrest; 132: rear-side headrest; 133: ring bracket; 140: support portion; 200: rear projection screen; 210: mounting bracket; 211: second mounting hole; 220: rotation shaft; 300: heat dissipation structure; 310: air outlet; 311: rectangular hole; 320: fan; 330: air inlet; and 340: backrest ventilation bag.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation. In addition, in the descriptions of embodiments, unless otherwise specified, "a plurality of" means two or more. An embodiment of this application provides a seat. The seat includes a backrest framework 100, the backrest framework 100 includes an upper beam 110, and the upper beam 110 includes a first mounting hole 111, so that a rear projection screen 200 is fastened to the upper beam 110 via the first mounting hole 111.

The foregoing rear projection screen may also be referred to as a light field screen. The rear projection screen is fastened to the backrest framework. When a human eye is at a specific distance from a backrest, the human eye may see an enlarged high-definition virtual image when looking at the rear projection screen, thereby implementing 3-meter sight distance, quasi-3D effect, and 40-inch picture visual experience. In addition, the rear projection screen is disposed on the backrest framework to implement distance display, image stabilization, and motion-sensing synchronization, thereby effectively preventing a user from motion sickness. The rear projection screen uses diffuse reflection imaging, which has advantages of avoiding direct blue light and protecting eyesight. In addition, the human eye is always in a state of distance vision, with the lens flattened and the ciliary muscles relaxed.

To arrange a large-sized rear projection screen in the seat backrest, a structure of the backrest framework in the seat backrest needs to be redesigned. Different from a common backrest framework with an upper tube, in the backrest framework in this embodiment of this application, the upper tube in a headrest is changed to the upper beam. This structure has two purposes: (1) to meet strength of the framework; and (2) to provide a fastening point for mounting a headrest rod. Mounting holes on the rear projection screen may match a mounting structure on the backrest framework, so that the rear projection screen can be stably fastened to the backrest framework.

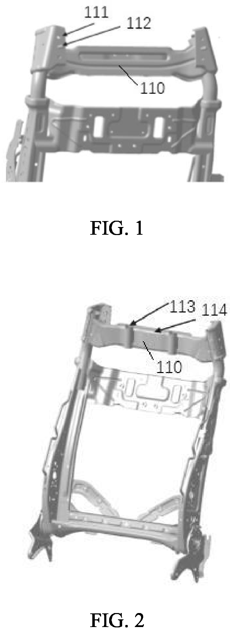

For example, FIG. 1 is a diagram of the backrest framework 100 according to an embodiment of this application. The backrest framework 100 may include the upper beam 110, and the upper beam 110 includes the first mounting hole 111.

Optionally, the upper beam 110 further includes a positioning pin 112, and the positioning pin 112 is configured to perform auxiliary positioning on the rear projection screen 200. When the rear projection screen 200 is assembled on the backrest framework 100, the rear projection screen 200 may be first positioned via the positioning pin 112, so that the first mounting hole 111 matches a mounting structure on the rear projection screen 200.

For example, FIG. 2 is another diagram of the backrest framework 100 according to an embodiment of this application. The upper beam 110 may include a headrest rod mounting hole 113 and a headrest rod mounting beam 114. A headrest guide sleeve mounting conduit may be arranged on the headrest mounting beam 114, and the headrest mounting beam 114 may be configured to fasten the headrest and increase strength of the headrest, thereby meeting regulatory requirements.

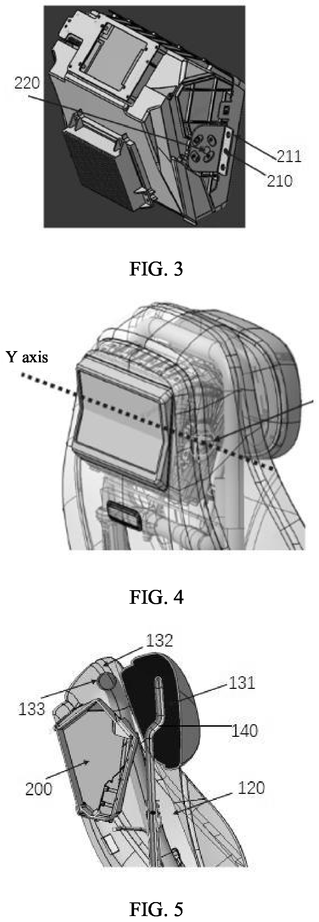

FIG. 3 is a diagram of the rear projection screen 200 according to an embodiment of this application. The rear projection screen 200 includes a mounting bracket 210, and the mounting bracket 210 includes a second mounting hole 211, so that the rear projection screen 200 is fastened to the upper beam 110 of the backrest framework 100 via the second mounting hole 211.

Optionally, the rear projection screen 200 further includes a rotation shaft 220.

Because human body sizes of different users are different, the different users have different requirements for a tilt angle of a screen of the rear projection screen. To meet use requirements of the different users, the screen of the rear projection screen 200 may be rotated around the rotation shaft 220 within a specific angle range. For example, the angle range is [-25°, 25°].

For example, the screen of the rear projection screen 200 has a function of rotating around a Y axis (a direction perpendicular to a vehicle forward direction). A manner of adjusting the angle of the screen may be as follows: The user presses a screen edge using a finger, to push the rear projection screen 200 to rotate around the rotation shaft 220, so that the screen can rotate within the range of [-25°, 25°].

The foregoing Y-axis direction may also be understood as a direction perpendicular to the vehicle forward direction (an X-axis direction).

Optionally, the rear projection screen 200 includes a damping structure. The damping structure may be configured to prevent the screen of the rear projection screen from rotating when a force applied by the user on the screen edge of the rear projection screen 200 is less than or equal to a preset value (for example, the preset value may be 7N to 10N) or when the user does not apply a force on the screen edge.

For example, FIG. 4 is a diagram of rotating the rear projection screen 200 around the rotation shaft 220 according to an embodiment of this application.

Optionally, the first mounting hole 111 and the second mounting hole 211 may cooperate with each other via a connection piece (for example, a bolt), so that the rear projection screen 200 is fastened to the upper beam 110.

An embodiment of this application further provides a headrest 130. The headrest 130 is located in a seat, a rear projection screen 200 is mounted on the seat, a first side of the headrest 130 is provided with a ring bracket 133, and the rear projection screen 200 is located inside the ring bracket 133. The first side is a side away from a head of a user on the seat. In this way, the ring bracket disposed on the first side of the headrest can protect the rear projection screen, and prevent the rear projection screen from being damaged by an external force. The first side may also be understood as a front side of the headrest.

To prevent the rear projection screen 200 from affecting comfort of the seat, the rear projection screen 200 may be arranged on a back face of the headrest 130. A front face of the headrest 130 is to provide soft feeling when the head of the user touches the headrest 130, and the ring bracket 133 may be arranged on the back face of the headrest 130.

For example, FIG. 5 is a diagram of a seat on which the rear projection screen 200 is arranged according to an embodiment of this application. The headrest 130 may be inserted into a seat backrest 120. The headrest 130 may be divided into a front-side headrest 131 and a rear-side headrest 132. The rear-side headrest 132 includes the ring bracket 133. The rear projection screen 200 may be located in the ring bracket 133, and the ring bracket 133 may protect the rear projection screen 200.

As shown in FIG. 5, the ring bracket 133 may extend from the seat backrest 120 to the headrest 130, and the rear projection screen 200 may be located inside the ring bracket 133.

Optionally, as shown in FIG. 5, a support portion 140 is further extended from the seat backrest 120. The support portion 140 extends from the seat backrest 120 and bends to a position of the head of the user. The support portion 140 may support a soft material on the headrest, thereby bringing comfortable experience to the user. The rear projection screen 200 heats up when working. It is found through simulation that, when an external temperature is 74°C, a temperature of the seat on which the rear projection screen 200 is arranged can reach about 93°C. A part of a body of the rear projection screen 200 is located inside the seat backrest 120, and internal space of the seat backrest 120 is sealed. To ensure that the temperature inside the seat is not excessively high because the rear projection screen 200 heats up, a heat dissipation structure 300 may be arranged inside the seat backrest 120.

Optionally, the heat dissipation structure 300 may include an air outlet 310, a fan 320, and an air inlet 330. The air inlet 330, the fan 320, and the air outlet 310 are arranged from bottom to top. The rear projection screen 200 is located on an air outlet path of the fan 320.

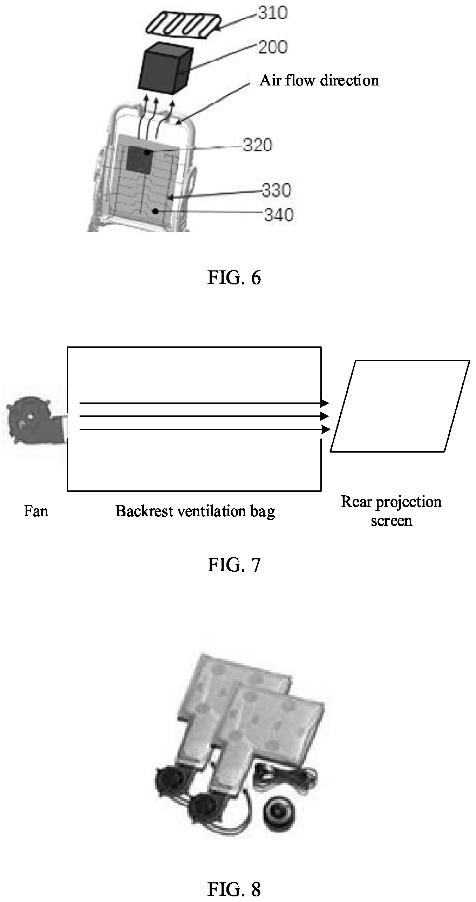

For example, FIG. 6 is a diagram of the heat dissipation structure 300 according to an embodiment of this application. The heat dissipation apparatus 300 further includes a backrest ventilation bag 340. One end of the backrest ventilation bag 340 is connected to the fan 320, an air outlet is disposed on the other end of the backrest ventilation bag, and the rear projection screen 200 is located on an air outlet path of the air outlet of the backrest ventilation bag 340.

For example, FIG. 7 is a diagram of a position relationship between the fan 320, the backrest ventilation bag 340, and the rear projection screen 200 according to an embodiment of this application. One end of the backrest ventilation bag 340 is connected to the fan 320, the other end has the air outlet, and the air outlet is aligned with the rear projection screen 200. A remaining part of the backrest ventilation bag 340 is a fully enclosed structure. After passing through the backrest ventilation bag 340 to implement wind energy aggregation, an air flow blown from the fan 320 is blown to the rear projection screen 200, thereby helping improve cooling effect of the rear projection screen 200.

For example, FIG. 8 is a physical image of the backrest ventilation bag 340 according to an embodiment of this application. The backrest ventilation bag 340 is a three-dimensional (3-dimension, 3D) textile structure, so that the air flow can flow through the backrest ventilation bag 340, and the backrest ventilation bag 340 can also have good support, thereby preventing collapse after a long ride.

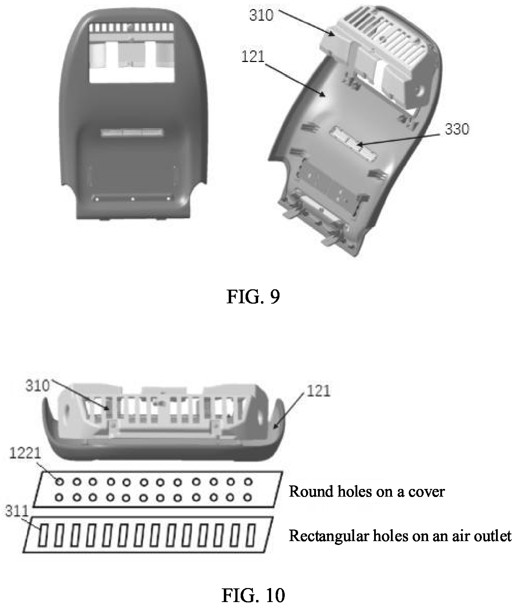

Optionally, the seat includes a backplane 121, a recess portion is disposed on the backplane 121, and the air inlet 330 may be located in the recess portion. For example, FIG. 9 is a diagram of the backplane 121 of the seat backrest according to an embodiment of this application. The backplane 121 includes the air outlet 310 and the air inlet 320. It can be learned that the air inlet 330 is located in the recess portion of the backplane 121, and is close to knee space of a rear passenger. The air inlet 330 is arranged here mainly with the following considerations.
(1) Air rises after being heated.
(2) The air inlet is arranged in the knee space recess portion below the backrest, which is not easy to find and does not affect an appearance of the seat.
(3) The knee space position is far away from a human body, and the air is not easily perceived by the human body during air intake.

For example, a distance between the air inlet 330 and the ground in the vehicle cockpit is [200 mm, 500 mm].

Optionally, the seat backrest 120 includes a seat cover 122, a plurality of ventilation holes 1221 are disposed on the seat cover 122, and an arrangement position of at least a part of the plurality of ventilation holes 1221 corresponds to an arrangement position of the air outlet 310.

Optionally, a size of the air outlet 310 is greater than a size of the ventilation hole 1221. For example, an area of the air outlet is greater than an area of the ventilation hole.

Optionally, a projection area of at least the part of ventilation holes on a preset plane (for example, the ground) is located in a projection area of the air outlet on the preset plane.

Optionally, the air outlet 310 is located in a top area of the seat backrest 120.

For example, FIG. 10 is a diagram of a plurality of ventilation holes 1221 and an air outlet 310 on the seat cover according to an embodiment of this application. The plurality of ventilation holes 1221 may be round holes. The air outlet 310 may be located in the top area of the seat backrest 120, and a shape of the air outlet 310 is a rectangular hole 311. Each rectangular hole 311 may be aligned with at least a part of the plurality of ventilation holes 1221.

Optionally, the ventilation hole 1221 may be located on a shoulder cover of the seat backrest 120, and the air outlet 310 may be located below the shoulder cover.

In this embodiment of this application, the air outlet 310 is arranged in the top area of the seat backrest 120. On one hand, the air rises after being heated. On the other hand, the ventilation hole on the shoulder cover may be reused, and no additional hole needs to be drilled on the cover. The hole on the cover is a round hole, and the hole on the air outlet 310 is a rectangular hole. Arrangement manners and arrangement positions of the two types of holes are precisely matched, to ensure that the air outlet is not blocked, thereby helping ensure ventilation effect.

An embodiment of this application further provides a seat system. The seat system includes the seat and the rear projection screen.

An embodiment of this application further provides a vehicle. The vehicle includes the foregoing seat, or the vehicle includes the foregoing headrest, or the vehicle includes the foregoing rear projection screen, or the vehicle includes the foregoing seat system.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A seat, wherein a rear projection screen is mounted on the seat, the seat comprises a heat dissipation apparatus, the heat dissipation apparatus comprises an air inlet, a fan, and an air outlet, and the air inlet, the fan, and the air outlet are arranged from bottom to top, wherein
the rear projection screen is located in an air-outlet path of the fan.

2. The seat according to claim 1, wherein the seat comprises a seat cover, a plurality of ventilation holes are disposed on the seat cover, and an arrangement position of at least a part of the plurality of ventilation holes corresponds to an arrangement position of the air outlet.

3. The seat according to claim 1 or 2, wherein the heat dissipation apparatus further comprises a backrest ventilation bag; and
one end of the backrest ventilation bag is connected to the fan, an air outlet is disposed on the other end of the backrest ventilation bag, and the rear projection screen is located in an air-outlet path of the air outlet of the backrest ventilation bag.

4. The seat according to any one of claims 1 to 3, wherein the air outlet is located in a top area of a seat backrest in the seat.

5. The seat according to any one of claims 1 to 4, wherein the seat comprises a seat backplane, a recess portion is disposed on the seat backplane, and the air inlet is disposed in the recess portion.

6. A seat, wherein the seat comprises a backrest framework, the backrest framework comprises an upper beam, and the upper beam comprises a first mounting hole, so that a rear projection screen is fastened to the upper beam via the first mounting hole.

7. The seat according to claim 6, wherein the upper beam comprises a positioning pin, and the positioning pin is configured to position the rear projection screen.

8. A headrest, wherein the headrest is located in a seat, a rear projection screen is mounted on the seat, a first side of the headrest is provided with a ring bracket, and the rear projection screen is located inside the ring bracket, wherein
the first side is a side away from a user's head on the seat.

9. The headrest according to claim 8, wherein the headrest comprises a support portion bent towards a second side, and the support portion is configured to support the headrest on the second side, and the second side is a side close to the user's head on the seat.

10. A rear projection screen, wherein the rear projection screen comprises a mounting bracket, and the mounting bracket comprises a first mounting hole, so that the rear projection screen is fastened to an upper beam of a seat framework via the first mounting hole.

11. The rear projection screen according to claim 10, wherein the rear projection screen further comprises a rotation shaft, and a screen of the rear projection screen rotates around the rotation shaft.

12. The rear projection screen according to claim 10 or 11, wherein the mounting bracket further comprises a second mounting hole, the seat framework further comprises a positioning pin, and a size of the second mounting hole matches a size of the positioning pin.

13. A seat system, wherein the seat system comprises the seat according to any one of claims 1 to 7, the headrest according to claim 8 or 9, and the rear projection screen according to any one of claims 10 to 12.

14. A vehicle, wherein the vehicle comprises the seat according to any one of claims 1 to 7, or the vehicle comprises the headrest according to claim 8 or 9, or the vehicle comprises the rear projection screen according to any one of claims 10 to 12, or the vehicle comprises the seat system according to claim 13.
